Europäisches Patentamt

European Patent Office

Office européen des brevets

(11) Veröffentlichungsnummer: **0 350 508**

**A1**

(12)
# EUROPÄISCHE PATENTANMELDUNG
## veröffentlicht nach Art. 158 Abs. 3
## EPÜ

(21) Anmeldenummer: 88903733.9

(22) Anmeldetag: 14.12.87

(86) Internationale Anmeldenummer:
PCT/SU87/00145

(87) Internationale Veröffentlichungsnummer:
WO 89/05780 (29.06.89 89/14)

(51) Int. Cl.⁴: **C03C 3/097**

(43) Veröffentlichungstag der Anmeldung:
**17.01.90 Patentblatt 90/03**

(84) Benannte Vertragsstaaten:
**CH DE FR GB LI NL**

(71) Anmelder: **SERGEEV, Alexandr Sergeevich**
**pr. Marshala Zakharova, 27-3-17**
**Leningrad, 198330(SU)**

Anmelder: **PISAREVSKY, Alexandr Moiseevich**
**ul. Kronverxkaya, 29/37-109**
**Leningrad, 197101(SU)**

Anmelder: **ERSHOV, Oleg Sergeevich**
**pr. Lunacharskogo, 100-23**
**Leningrad, 195267(SU)**

Anmelder: **TOLSTIKOV, Pavel Mikhailovich**
**Petrodvorets, Krasny pr., 52-22**
**Leningrad, 198903(SU)**

Anmelder: **DAMESHEK, Gennady Alexandrovich**
**ul. M.Pirogovskaya, 23-28**
**Moscow, 119435(SU)**

Anmelder: **KRUNCHAK, Vladimir Georgievich**
**Institutsky pr., 9-50**
**Leningrad 194018(SU)**

Anmelder: **SHULTS, Igor Mikhailovich**
**ul. Budapeshtskaya, 9-1-44**
**Leningrad 196212(SU)**

Anmelder: **ZAIDENMAN, Iosif Arnoldovich**
**pr. Mira, 118a-35**
**Moscow, 169164(SU)**

(72) Erfinder: **SERGEEV, Alexandr Sergeevich**
**pr. Marshala Zakharova, 27-3-17**
**Leningrad, 198330(SU)**
Erfinder: **PISAREVSKY, Alexandr Moiseevich**
**ul. Kronverxkaya, 29/37-109**
**Leningrad, 197101(SU)**
Erfinder: **ERSHOV, Oleg Sergeevich**
**pr. Lunacharskogo, 100-23**
**Leningrad, 195267(SU)**
Erfinder: **TOLSTIKOV, Pavel Mikhailovich**
**Petrodvorets, Krasny pr., 52-22**
**Leningrad, 198903(SU)**
Erfinder: **DAMESHEK, Gennady Alexandrovich**
**ul. M.Pirogovskaya, 23-28**
**Moscow, 119435(SU)**
Erfinder: **KRUNCHAK, Vladimir Georgievich**
**Institutsky pr., 9-50**
**Leningrad 194018(SU)**
Erfinder: **SHULTS, Igor Mikhailovich**
**ul. Budapeshtskaya, 9-1-44**
**Leningrad 196212(SU)**
Erfinder: **ZAIDENMAN, Iosif Arnoldovich**
**pr. Mira, 118a-35**
**Moscow, 169164(SU)**

(74) Vertreter: **Patentanwälte Zellentin & Partner**
**Zweibrückenstrasse 15**
**D-8000 München 2(DE)**

(54) **ELEKTRODEN-GLAS.**

(57) Elektrodenglas, das in seiner Zusammensetzung (Masse %) enthält:

| | |
|---|---|
| $SiO_2$ | von 50,5 bis 56,8 |
| $Li_2O$ | von 10,5 bis 11,5 |
| $La_2O_3$ | von 9,3 bis 13,5 |
| $Nd_2O_3$ | von 17,5 bis 19,2 |
| $Ta_2O_5$ | von 3,0 bis 8,6. |

FIG.1

RECEIVING SECTION

-Formalities-

ɪe, 0 1 NOV. 1989

## NOTE TO THE PRINTERS

- This application is to be published in the German language

- For code 54 (title) please use title as mentioned on page 1 of the description

- For code 57 (abstract) please use the abstract as filed by the applicant on ___14088 9___

N. C. SMITH

ELEKTRODENGLAS

Gebiet der Technik

Die Erfindung bezieht sich auf verschiedene Glasarten, und insbesondere auf Elektrodenglas.

Stand der Technik

Die Besonderheit bei Fermentprozessen besteht darin, daß die zur Durchführung einzusetzenden industriemäßigen und Laborausrüstungen periodisch einer kurzzeitigen Wärmebehandlung mit Dampf und Wasser mit dem Ziel der Sterilisation des Innenraumes ausgesetzt werden. Die Sterilisation sowohl mit Dampf als auch mit Wasser verlangt von den Elektroden zur Messung des pH-Wertes thermische und chemische Beständigkeit. Die Forderung nach der Einhaltung der Sterilisation gehört zu den strengsten von allen Forderungen, die an Glaselektroden gestellt werden, und diese Forderung ist komplizierter als, beispielsweise, die Arbeitsfähigkeit bei hohen Temperaturwerten. In diesem Fall werden die empfindlichen Elektrodenmembranen aus einem chemisch beständigen Glas, in der Regel mit einem hohen elektrischen Widerstand bei Raumtemperatur hergestellt. Die sterilisierbaren Elektroden werden im Unterschied zu Hochtemperaturelektroden zur Messung des pH-Wertes bei einer Temperatur von 20 bis 40°C eingesetzt, sie müssen jedoch dabei periodischer Bearbeitung mit Dampf beziehungsweise mit Wasser mit einer Temperatur von höchstens 150°C innerhalb von 2 Stunden standhalten. Unter Einwirkung von Dampf beziehungsweise Wasser bei hoher Temperatur innerhalb dieser Zeitspanne erfolgt die Veränderung der Eigenschaften der potentialbestimmenden Oberfläche einer empfindlichen Membrane. Hierdurch verändern sich die Parameter der Elektroden, indem sie die zulässigen Grenzwerte übersteigen.

Die an Elektroden aus bekannten Glasarten durchgeführten Untersuchungen haben ergeben, daß die Sterilisation eine Verschiebung der zu messenden Potentialwerte hervorruft und dadurch die Eichung versetzt, die Steilheit verringert und die Grenzwerte der $H^+$-Funktion reduziert. Außerdem ist bekannt, daß die Sterilisation die dynamischen Kenndaten der Elektroden in Bezug auf die Änderung des Säuregehaltes der Lösungen vergrößert sowie zur Erhöhung des elektrischen Widerstandes führt. Die Änderung der Kenndaten der Elektroden unter den Bedingungen des industriemäßigen Betriebes führt zur Senkung der Präzision der Messungen und zur Notwendigkeit, die Anzeigen des Elektrodensystems, das eine Meßelektrode und eine Vergleichselektrode vorsieht, hinsichtlich der Ergebnisse der analytischen Ermittlung des pH-Wertes in einer Probe zu korrigieren, was bei der Automatisierung der Produktion äußerst unerwünscht ist.

Die Grundlage der Rezepturen aller modernen Elektrodengläser ist das Zusammenführen der Oxide von Seltenerdmetallen mit $Cs_2O$. Die Untersuchungen zeigten jedoch, daß eine der Hauptursachen der Instabilität der Kenndaten der Elektroden unter den Bedingungen der Sterilisation mit Dampf gerade das gleichzeitige Vorhandensein im Glas von in ihrem Einfluß auf dessen physikalisch-chemische Parameter verschiedenen Komponenten ist, solcher wie Oxyde der Seltenerdmetalle mit $Cs_2O$. Das Vorliegen des Cäsiumoxids in der Zusammensetzung von Glas verringert die chemische Beständigkeit, insbesondere die Wasserbeständigkeit, was seinerseits den elektrischen Widerstand stark vergrößert.

Bekannt ist ein Elektrodenglas (SU, A, 614042) mit folgendem Verhältnis der Komponenten (Masse %):

| | |
|---|---|
| $SiO_2$ | von 50 bis 56,5 |
| $Li_2O$ | von 10 bis 12 |
| $La_2O_3$ | von 7,5 bis 9,5 |
| $Cs_2O$ | von 6,5 bis 8,5 |
| $Nd_2O_3$ | von 17 bis 19. |

Die empfindliche Elektrodenmembrane, die auf der Grundlage dieses Glases ausgeführt ist, kann 30 Zyklen der Sterilisation mit Dampf einhalten. Die Dauer der Zyklen verändert sich in Abhängigkeit von der Temperatur der Sterilisation. Bei einer Temperatur von 120°C beträgt die zulässige Dauer eines Zyklus 1 Stunde, bei 150°C beträgt sie 10 Minuten.

Bei drastischen Bedingungen der Sterilisation, beispielsweise, bei der Vergrößerung der Dauer eines Zyklus der Sterilisation mit Dampf bei einer maximalen Temperatur von 150°C bis zu 2 Stunden verändern die Elektroden ihre Kenndaten wesentlich: die Größe des Potentials der Elektrode und die Steilheit der $H^+$-Funktion, wodurch die Präzision der Messung des pH-Wertes herabgesetzt wird und es nicht möglich ist, diese für die Kontrolle des pH-Wertes ohne Eichung zu verwenden.

Offenbarung der Erfindung

Der Erfindung liegt die Aufgabe zugrunde, ein Elektrodenglas mit solchen Komponenten und mit einem solchen Verhältnis der Komponenten zu entwickeln, die die Stabilität des Potentials der Elektrode und der Steilheit der $H^+$ - Funktion gegenüber der Einwirkung von Dampf bei einer Temperatur bis 150°C gewährleisten.

Die gestellte Aufgabe wird dadurch gelöst, daß das Elektrodenglas, das in seiner Zusammensetzung $SiO_2$, $Li_2O$, $La_2O_3$, $Nd_2O_3$ aufweist, erfindungsgemäß, $Ta_2O_5$ bei folgendem Verhältnis der Komponenten (Masse %) zusätzlich enthält:

| | |
|---|---|
| $SiO_2$ | von 50,5 bis 56,8 |
| $Li_2O$ | von 10,5 bis 11,5 |
| $La_2O_3$ | von 9,3 bis 13,5 |
| $Nd_2O_3$ | von 17,5 bis 19,2 |
| $Ta_2O_5$ | von 3,0 bis 8,6. |

Das erfindungsgemäße Elektrodenglas bewirkt die Beständigkeit der Elektrode gegenüber der Einwirkung von Dampf bei einer Temperatur von höchstens 150°C, wodurch die Stabilität und die Reproduzierbarkeit des Potentials der Elektrode unter Beibehaltung der Steilheit der $H^+$ - Funktion vergrößert werden.

Der Gehalt an Oxyden der Seltenerdmetalle im Elektrodenglas ist auf die Anforderungen an die chemische Beständigkeit, insbesondere an die Dampf- und Wasserbeständigkeit zurückzuführen. Bekannt ist, daß sich bei einer allmählichen Vergrößerung des Gehaltes an Oxyden der Seltenerdmetalle in der Zusammensetzung des Glases die Geschwindigkeit der Auslaugung und der Zerstörung des Glases verringert, daß sich auch die Wasserbeständigkeit von Glas wesentlich vergrößert, was besonders wichtig für eine Elektrode ist, die unter den extremen Bedingungen der Hochtemperaturbehandlung mit Dampf eingesetzt wird. Das beeinflußt seinerseits wesentlich die Stabilität der Kenndaten der Elektroden. Die Abweichung des Potentials der Elektroden, deren empfindliche Membrane aus Glasarten mit einem unterschiedlichen Gehalt an $La_2O_3$ ausgeführt ist , verringert sich wesentlich von den stationären Werten in Pufferlösungen bei der Vergrößerung des Gehaltes an $La_2O_3$ beziehungsweise des Gesamtanteils von Oxyden der Seltenerdmetalle (Lanthan und Neodym). Die Potentiale der Elektroden aus Glasarten, die insgesamt über 6 Mol% Oxyde der Seltenerdmetalle aufweisen, geben eine minimale Differenz zum stationären Wert, der vor der Sterilisation erreicht wird.

Andererseits wächst bei der Vergrößerung ihrer Menge im Elektrodenglas der elektrische Widerstand infolge des Auftretens des Effektes der Unterdrückung der Beweglichkeit der Alkalikomponente des Glases mit einem Oxyd als Modifikator , und es verschlechtern sich auch stark die technologischen Eigenschaften von Glas. Für Glasarten, die über 8 Mol% der Oxyde der Seltenerdmetalle aufweisen, vergrößert sich die Kristallisationsfähigkeit, die durch das gleichzeitige Vorliegen mehrerer Oxyde der Seltenerdmetalle im Glas (gleichzeitig $La_2O_3$ und $Nd_2O_3$) verringert werden kann.

Nach der Gesamtheit der Eigenschaften besonders optimal ist ein Elektrodenglas, das von 6 bis 7 Mol% Oxyde der Seltenerdmetalle aufweist.

Bekannt ist, daß $Ta_2O_5$ eine Komponente darstellt, die am meisten die Wasserbeständigkeit von Glas erhöht, seine Einführung ist jedoch durch den negativen Einfluß auf die Selektivität von Glas gegenüber Wasserstoffionen begrenzt. Unter den Bedingungen der Sterilisation mit Dampf verbessert eine geringe Menge an $Ta_2O_5$ in der Zusammensetzung von Glas die Elektrodeneigenschaften von Glas: es verringert sich die Abweichung des Potentials der Elektroden von den stationären Werten, und es verbessern sich ihre dynamischen Kennziffern (Zeit der Rückkehrung zu den stationären Werten). Der Gehalt an $Ta_2O_5$ im Glas über 8,6 Masse% setzt den erzielten positiven Effekt herab. Hervorzuheben ist, daß die Einführung von Tantalpentoxid in das Glas den elektrischen Widerstand von Glas (im Unterschied zum Effekt der Vergrößerung des elektrischen Widerstandes, der für alle Oxyde, Glasbildner kennzeichnend ist) nicht vergrößert, sondern etwas herabsetzt. Seine geringe Menge in der Zusammensetzung verbessert außerdem die technologischen Eigenschaften von Glas (die Kristallisationsfähigkeit und die lineare Wärmedehnzahl verringern sich). Hierdurch stellt $Ta_2O_5$ eine nützliche Komponente für Elektrodenglas dar, das der aggressiven Einwirkung von Dampf ausgesetzt wird.

Nachstehend wird die Erfindung an Hand ausführlicher Beschreibung von Ausführungsbeispielen unter Bezug auf Zeichnungen erläutert. Es zeigen:

Fig. 1 eine graphische Darstellung der Abhängigkeit der Abweichung des Potentials der Elektroden, deren empfindliche Membranen aus dem erfindungsgemäßen Glas und aus Glas bekannter Zusammensetzung ausgeführt sind, von der Anzahl der Zyklen der Sterilisation mit Dampf;

Fig. 2 eine graphische Darstellung der Abhängigkeit des Widerstandes der Elektroden, deren empfindliche Membranen aus dem erfindungsgemäßen Glas und aus dem Glas mit bekannter Zusammensetzung ausgeführt sind, von der Anzahl der Zyklen der Sterilisation mit Dampf.

Ausführungsvariante der Erfindung

Das erfindungsgemäße Elektrodenglas weist in seiner Zusammensetzung (Masse%) auf:

| | |
|---|---|
| $SiO_2$ | von 50,5 bis 56,8 |
| $Li_2O$ | von 10,5 bis 11,5 |
| $La_2O_3$ | von 9,3 bis 13,5 |
| $Nd_2O_3$ | von 17,5 bis 19,2 |
| $Ta_2O_5$ | von 3,0 bis 8,6. |

Zur Herstellung von Glas werden chemisch reine Pulverreagenzien in Form von Oxyden und Karbonaten, die vorher bis zu einem konstanten Gewicht getrocknet werden, eingesetzt.

Das erfindungsgemäße Elektrodenglas stellt man in an sich bekannter Weise her.

Zur besseren Erläuterung der Erfindung werden nachstehend konkrete Beispiele für ihre Durchführung, berechnet auf die Ausbeute von 100 g Elektrodenglas, angeführt.

Beispiel 1

Man stellt das Glas aus einem Gemengesatz folgender Zusammensetzung her: 56,8 g $SiO_2$, 28,4 g $Li_2CO_3$, 9,3 g $La_2O_3$, 19,2 g $Nd_2O_3$, 3,2 g $Ta_2O_5$. Die Synthese führt man in einem Platintiegel in Öfen mit elektrischen Siliziumkarbidheizleitern durch. Der Gemengesatz wird bei einer Temperatur von $1200^\circ C$ verschmolzen. Im weiteren wird die Temperatur des Ofens auf $1450^\circ C$ gesteigert und die Glasschmelze wird bei dieser Temperatur während drei Stunden gehalten. Während des Hochtemperaturschmelzens wird die Glasschmelze mindestens zweimal vermischt. Nach der Beendigung der Synthese formt man das Glas in Form von Stäbchen. Man erhält Glas folgender Zusammensetzung (in Masse%):

56,8 SiO$_2$, 11,5 Li$_2$O, 9,3 La$_2$O$_3$, 19,2 Nd$_2$O$_3$, 3,2 Ta$_2$O$_5$.

Beispiel 2

Glas wird aus 53,6 g Si$_2$O, 27,2 g Li$_2$CO$_3$, 11,1 g La$_2$O$_3$, 18,3 Nd$_2$O$_3$, 6,0 g Ta$_2$O$_5$ nach dem in Beispiel 1 beschriebenen Verfahren synthetisiert. Die Zusammensetzung des Glases (in Masse%) ist wie folgt: 53,6 SiO$_2$, 11,0 Li$_2$O, 11,1 La$_2$O$_3$, 18,3 Nd$_2$O$_3$, und 6,0 Ta$_2$O$_5$.

Beispiel 3

Glas wird aus 54,0 g SiO$_2$, 27,4 g Li$_2$O$_3$, 13,5 g La$_2$O$_3$, 18,4 g Nd$_2$O$_3$, und 3,0 g Ta$_2$O$_5$ nach dem in Beispiel 1 beschriebenen Verfahren synthetisiert. Die Zusammensetzung des Glases (in Masse%) ist wie folgt: 54,0 SiO$_2$, 11,1 Li$_2$O, 13,5 g La$_2$O$_3$, 18,4 Nd$_2$O$_3$, und 3,0 Ta$_2$O$_5$.

Beispiel 4

Glas wird aus 52,2 g SiO$_2$, 26,7 g Li$_2$CO$_3$, 13,1 g La$_2$O$_3$, 18,0 g Nd$_2$O$_3$, und 5,9 g Ta$_2$O$_5$ nach dem in Beispiel 1 beschriebenen Verfahren synthetisiert. Die Zusammensetzung des Glases (in Masse%) ist wie folgt: 52,2 SiO$_2$, 10,8 Li$_2$O, 13,1 La$_2$O$_3$, 18,0 Nd$_2$O$_3$ und 5,9 Ta$_2$O$_5$.

Beispiel 5

Glas wird aus 50,5 g SiO$_2$, 25,9 g Li$_2$CO$_3$, 12,9 g La$_2$O$_3$, 17,5 g Nd$_2$O$_3$, 8,6 g Ta$_2$O$_5$ nach dem in Beispiel 1 beschriebenen Verfahren synthetisiert. Die Zusammensetzung des Glases (in Masse%) ist wie folgt: 50,5 SiO$_2$, 10,5 Li$_2$O, 12,9 La$_2$O$_3$, 17,5 Nd$_2$O$_3$, und 8,6 Ta$_2$O$_5$.

Eine Elektrode, deren empfindliche Membrane aus dem erfindungsgemäßen Glas ausgeführt ist, weist eine H$^+$ - Funktion in einem Bereich von − 0,5 bis 10,5 pH bei einer Temperatur von 25°C und von 0 bis 9,5 pH bei einer Temperatur von 40°C in Lösungen, die Natriumionen mit einer Konzentration von 1 Mol/l enthalten, auf und kann schärferen Bedingungen der Sterilisation mit Dampf bei einer Temperatur von 150°C und einer Dauer des Behandlungszyklus mit Dampf von 2 Stunden standhalten. Die Steilheit der $H^+$ – Funktion der Elektroden vor und nach der Sterilisation entspricht dem theoretischen Wert.

Die Kenndaten der Elektrodengläser: stationäres Potential (E) in der Pufferlösung, Abweichung ($\triangle$ E) von diesem Potential nach der Sterilisation mit Dampf, Widerstand (R) der Elektroden, deren empfindliche Membrane aus dem erfindungsgemäßen Elektrodenglas hergestellt ist, sind zu allen genannten Beispielen in der Tabelle angeführt.

Tabelle

| Glas (Nr.des Beispiels) | Vor der Sterilisation | | n, Anzahl der Zyklen | |
|---|---|---|---|---|
| | $-E^{x})$ mV | R MOhm | $\triangle$ E | R |
| 1 | 2 | 3 | 4 | 5 |
| 1 | 1369 | 35 | 5 | 60 |
| 2 | 1381 | 30 | 2 | 60 |
| 3 | 1361 | 40 | 4 | 40 |
| 4 | 1379 | 30 | –3 | 60 |
| 5 | 1379 | 20 | 5 | 45 |
| gemäß SU,A, 614042 | 1294 | 80 | 30 | 130 |

x) Potential der Elektrode gegenüber der Chlor-thallium–Vergleichselektrode in einer Pufferlösung mit einem pH–Wert von 4,01 bei einer Temperatur von $25^{\circ}C$.

Fortsetzung der Tabelle

| (Nr.des Beispiels) Glas | n,Anzahl der Zyklen | | | |
| | 3 | | 10 | |
| | △ E | R | △ E | R |
| 1 | 6 | 7 | 8 | 9 |
| 1 | 2 | 110 | −2 | 260 |
| 2 | 1 | 100 | −3 | 250 |
| 3 | 0 | 70 | 1 | 230 |
| 4 | 2 | 90 | 5 | 260 |
| 5 | 3 | 75 | 4 | 225 |
| gemäß SU, A, 614042 | 40 | 240 | 23 | 600 |

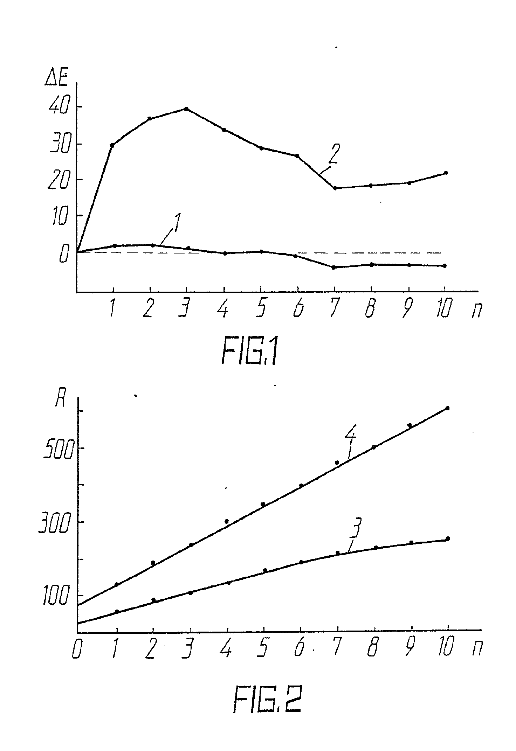

In Fig.1 sind graphische Darstellungen der Abhängigkeit der Abweichung des Potentials der Elektroden, deren empfindliche Membranen aus dem erfindungsgemäßen Glas und aus Glas mit bekannter Zusammensetzung ausgeführt sind, von der Anzahl der Zyklen der Sterilisation mit Dampf abgebildet, in denen an der Abszissenachse die Anzahl n der Zyklen und an der Ordinatenachse die Abweichung △ E des Potentials in mV abgemessen wird. Die Kurve 1 entspricht der Elektrode, deren empfindliche Membrane aus Glas gemäß Beispiel 2 ausgeführt ist, und die Kurve 2 entspricht Glas mit bekannter Zusammensetzung, die in SU, A, 614042 genannt ist (Messung bei Raumtemperatur).

In Fig.2 sind graphische Darstellungen der Abhängigkeit des Widerstandes der Elektroden, deren empfindliche Membranen aus dem erfindungsgemäßen Glas und aus Glas bekannter Zusammensetzung ausgeführt sind, von der Anzahl der Zyklen der Sterilisation mit Dampf abgebildet, in denen an der Abszissenachse die Anzahl n der Zyklen und an der Ordinatenachse der Widerstand R der Elektrode in MOhm abgemessen sind. Die Kurve 3 entspricht einer Elektrode, deren empfindliche Membrane aus dem Glas gemäß Beispiel Nr.2, und die Kurve 4 entsprechend mit Glas bekannter Zusammensetzung, die in SU, A, 614042 genannt ist (Messung bei Raumtemperatur), hergestellt ist.

Die in der Tabelle und in Fig.1 und 2 angeführten Ergebnisse geben den Anlaß zur Schlußfolgerung, daß es die hergestellten Zusammensetzungen von Elektrodenglas ermöglichen, im Vergleich zum Elektrodenglas gemäß SU, A, 614042, die Präzision der Messung des pH-Wertes ohne Eichung der Elektroden auf das 10-fache während der mehrmaligen Einwirkung von Dampf auf Grundlage stabileren elektrischen und elektrodenmäßigen Kenndaten zu erhöhen. Eine hohe Beständigkeit des Glases gegenüber der aggressiven Einwirkung von Dampf gestattet es, den Säuregehalt des Mediums mit einem geringeren Meßfehler zu messen, der während 10 Zyklen der Dampfbehandlung nicht $\pm$ 0,1 pH ($\pm$ 6 mV) übersteigt. Aus der Tabelle ist zu ersehen, daß die Abweichung des Potentials der Elektroden aus dem erfindungsgemäßen Glas nach der Behandlung mit Dampf vom stationären Wert, der vorher bei der Eichung mit Pufferlösungen ermittelt wurde, bedeutend geringer als bei den Elektroden aus dem Glas gemäß SU, A, 614042 ist.

Der elektrische Widerstand der Elektroden aus dem erfindungsgemäßen Glas beträgt vor der Sterilisation bei 25°C $25^{\pm}$ 3 MOhm und nach 10 Zyklen der Behandlung mit Dampf vergrößert er sich bis auf $250^{\pm}$ 25 MOhm, was bedeutend geringer als bei Elektroden aus dem Glas gemäß SU, A, 614042 ist, bei denen sich der Widerstand von $80^{\pm}$ 10 MOhm bis auf $600^{\pm}50$ MOhm vergrößert.

Hierdurch gewährleistet das erfindungsgemäße Elektrodenglas die Beständigkeit der jeweiligen Elektrode gegenüber der Einwirkung von Dampf, wodurch die Stabilität und Reproduzierbarkeit des Potentials der Elektrode unter Beibehaltung der Steilheit der $H^{\pm}$ -- Funktion unter den Bedingungen der Sterilisation mit Dampf bei einer Temperatur von höchstens 150°C vergrößert wird.

Industriemäßige Verwertbarkeit

Die vorliegende Erfindung kann in der mikrobiologischen, chemisch-pharmazeutischen, medizinischen und Lebensmittelindustrie, deren Grundlage Fermentprozesse der Biosynthese sind, bei der Herstellung von empfindlichen Elektrodenmembranen, die bei der potentiometrischen Analyse flüssiger Medien auf die Aktivität der Wasserstoffionen verwendet werden, eingesetzt werden.

PATENTANSPRUCH

Elektrodenglas, das in seiner Zusammensetzung $SiO_2$, $Li_2O$, $La_2O_3$, $Nd_2O_3$ aufweist, d a d u r c h g e k e n n z e i c h n e t, daß es zusätzlich $Ta_2O_5$ bei folgendem Verhältnis der Komponenten (Masse%) enthält:

| | |
|---|---|
| $SiO_2$ | von 50,5 bis 56,8 |
| $Li_2O$ | von 10,5 bis 11,5 |
| $La_2O_3$ | von 9,3 bis 13,5 |
| $Nd_2O_3$ | von 17,5 bis 19,2 |
| $Ta_2O_5$ | von 3,0 bis 8,6. |

FIG.1

FIG.2

# INTERNATIONAL SEARCH REPORT

International Application No PCT/SU 87/00145

**I. CLASSIFICATION OF SUBJECT MATTER** (if several classification symbols apply, indicate all) [*]

According to International Patent Classification (IPC) or to both National Classification and IPC

IPC[4]    C 03 C 3/097

**II. FIELDS SEARCHED**

| Minimum Documentation Searched [7] | |
|---|---|
| Classification System | Classification Symbols |
| IPC[4] | C 03 C 3/095, 3/097, 4/00 |

| Documentation Searched other than Minimum Documentation to the Extent that such Documents are Included in the Fields Searched [*] |
|---|
| |

**III. DOCUMENTS CONSIDERED TO BE RELEVANT [*]**

| Category [*] | Citation of Document, [11] with indication, where appropriate, of the relevant passages [12] | Relevant to Claim No. [13] |
|---|---|---|
| A | SU, A1 614042, (V.M. Tarasova et al.) 2 June 1978 (02.06.78), see the claims cited in the application | 1 |
| A | SU, A1, 629174, (M.M. Shults et al.) 5 September 1978 (05.09.78), see claims | 1 |
| A | DE, B2, 2626916 (Owens-Illinois, Inc.), 10 July 1980 (10.07.80) see the claims | 1 |

---

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 13 June 1988 (13.06.88) | 1 September 1988 (01.09.88) |
| International Searching Authority | Signature of Authorized Officer |
| ISA/SU | |

Form PCT/ISA/210 (second sheet) (January 1985)